# EUROPEAN PATENT APPLICATION

(11) **EP 2 392 627 A2**
(43) Date of publication of application: **07.12.2011**
(21) Application number: 11168714.1
(22) Date of filing: 03.06.2011
(51) Int. Cl.: C09J 7/02

(54) **Security films and manufacture thereof**

(30) Priority: 04.06.2010 GB 1009458
(71) Applicant: Avon Adhesive Products Limited, Yate Bristol BS37 5TG (GB)
(72) Inventor: Dimond, Mark Lewis, Bristol, BS37 5QX (GB)
(74) Representative: Stoner, Gerard Patrick

(57) **Abstract**

Security films of the type used to make tamper-evident adhesive tape, also methods and apparatus for making the films. A polymer substrate film (10) e.g. of HDPE, is plasma treated while passing over a roller (6). Corona discharge is generated between a discharge electrode (4) and the roller (6). The roller (6) has a conductive external surface (14) with a relief pattern or cut pattern constituting an array of indicia (26) such as the word "VOID". The roller surface may be a layer of conductive polymer, laser cut to make the pattern. No plasma forms on the outer surface in pattern regions (22) where the roller surface (14) is recessed, so a subsequently applied coloured polymeric ink layer (38) adheres poorly in those regions. An adhesive layer (44) and protective release layer (46) are applied over the ink layer.

## Description

The present invention relates to security film materials, products made from or comprising security film materials, methods of making the films using corona discharge (plasma) treatment and novel plasma treatment apparatus for making the films. Particularly although not exclusively it relates to security films of the type used to make tamper-evident adhesive tape.

### BACKGROUND

Tamper-evident security tape is widely used for adhesively closing and securing bags and other items where it is important to detect tampering or unauthorized access. It has a colour contrast feature which reveals a pattern if the tape is unstuck, even if it is subsequently stuck down again. It is used for example in police evidence bags and money deposit bags.

Relevant background knowledge is illustrated for example in EP-A-0491099, US5582887, US6537634 and WO2005/047411 to which reference should be made. They describe various suitable and conventional materials, many of which are applicable herein and are familiar to the skilled person. They also describe various means and structures for providing the necessary differential adhesion of the coloured layer, at predetermined pattern elements, as between front and rear parts of the laminate. Generally these involve forming a pattern of masking layer or primer layer on the substrate film.

Tamper-evident films or tapes are made from a transparent polymeric substrate film, typically polyester or polyethylene. In one conventional process a clear lacquer mask is applied in a pattern (often a repeating pattern or array of indicia, e.g. an array made of repeats of a warning word such as "VOID", "OPENED" or linguistic equivalent) on one surface of the film. The pattern leaves intervening regions uncovered.

The surface is then corona treated, i.e. plasma treated. Polymer films such as PET or HDPE are notoriously non-susceptible to adhesion. Plasma or corona treatment of polymeric substrates is a well-known way to improve adhesion, by increasing the surface energy. Thus, the surfaces of the clear lacquer pattern and of the intervening substrate film regions are treated. The treated clear-patterned film surface is then coated with a coloured layer of polymer-based ink as contrast agent, the ink adhering onto the treated lacquer pattern and intervening regions. A layer of adhesive can be applied over the contrast agent layer to constitute a tamper-evident adhesive film. A release layer may be applied over the adhesive to protect it until it is to be used.

Tapes may be prepared as such, or may be cut from wider prepared film pieces.

In use the film/tape is stuck to a counter-surface (e.g. at the closure of a bag or package) using the adhesive layer. If they are then separated, the ink on the intervening treated substrate regions - being well adherent - stays on the substrate. However the lacquer masking pattern, having been applied onto untreated substrate to which it scarcely adheres, pulls away from the substrate together with the ink layer on it so that a colour contrast pattern corresponding to the lacquer pattern is revealed on both film and counter-surface.

There is also usually disruption of the ink layer at the torn boundaries, and the previous uniform appearance cannot be restored by sticking the film back down

For the plasma treatment, conventional corona discharge apparatus has one or more fixed "treater" electrodes positioned at a predetermined gap over a section of a roller around which the substrate film is continuously fed. Usually the roller is grounded and the treater electrode is at high voltage. This is all well-known technology for treating various kinds of plastics for adhesion enhancement, and variants are known. Plasma forms above the film surface in the gap between the treater electrode and the roller, treating that film surface. The roller is usually of smooth metal, e.g. aluminium, for good conductivity and for full and close contact with the underside of the film which is not treated.

The whole process is usually done on a continuous basis, and may produce rolls of product, and/or the product may be cut or formed into tapes or made-up articles with a tamper-evident adhesive portion.

The known films and tapes work well. However it would be desirable to simplify their manufacture.

One object herein is to provide a simpler method of making security films, with a view to reducing costs.

Another object herein is to provide new and characteristic kinds of security film materials obtainable by the new methods, and which can have advantages in that the existence of the security pattern (geometric pattern, or array of letters, words and/or symbols) on the adhered material may be more difficult to see, increasing the ability to detect interference.

Another object is to provide a new plasma or corona treatment apparatus suitable for implementing the new production method.

### THE INVENTION

The present inventor has found a new way of plasma processing film substrates that opens the way to achieving patterned adhesion differentiation without the need for any mask or primer layer, enabling a novel and simpler product to be made more efficiently.

In one aspect the present invention provides a security film laminate, comprising
a polymeric substrate film, said substrate film having a first surface and a second surface, and
a layer of coloured contrast agent adhered to the first surface of the substrate film, the substrate film and layer of coloured contrast agent having a mutual contact interface;
the contact interface having a pattern of adhered regions and intervening regions, the adhesion between the contrast agent layer and the substrate film being stronger at the adhered regions than at the intervening regions. Specifically, this differential adhesion is achievable, and can be defined as having been achieved by, the substrate film having been plasma-treated in said pattern, at regions corresponding to the adhered regions, to increase the surface energy before application of said coloured contrast agent layer thereto.

Another aspect is a method of making a security film laminate, such as defined above, the method comprising the steps of:
(i) placing the polymeric substrate film for treatment in a corona discharge treater having a support electrode and a treater electrode, the support electrode having a treatment surface against which said second surface of the film rests, the electrode treatment surface having support regions which contact the second surface of the film to support it and relatively recessed regions where there is a gap between the second surface of the film and the treatment surface, said support regions and relatively recessed regions defining a pattern;
(ii) producing plasma between the treater electrode and the support electrode, whereby on the first surface of the film plasma forms only above said support regions, thereby plasma treating said first surface of the film according to said pattern to increase the surface energy thereof in regions according to said pattern;
(iii) forming said contrast agent layer on the first surface of the polymeric substrate film, whereby adhesion between the contrast agent layer and the substrate film is stronger at the film regions plasma treated according to said pattern, and corresponding to said support regions of the electrode treatment surface, than at intervening regions corresponding to said relatively recessed regions of the electrode treatment surface.

Another method aspect is a method for producing corona discharge-treated plastic film, the method including the steps of:
(i) placing a plastic film adjacent to a treatment surface of a ground electrode of a corona discharge treater, the treatment surface having a support section for supporting the film and a recessed section for providing a gap between the film and the ground electrode; and
(ii) treating the film with a treater electrode to produce a corona over part of an opposing surface of the plastic film.

The support section and recessed section form a pattern on the treatment surface. The pattern of raised and recessed sections defines the pattern produced on security film produced from the apparatus of the present invention.

The pattern is not particularly limited, but preferably is an array of indicia such as letters, words, numbers or symbols. For example the coloured pattern produced by the resulting tamper evident tape may convey an additional message or clarification that the tape has been tampered with, such as the word "VOID" or "OPENED".

In the method of the present invention, portions of the film adjacent to the support regions are in contact with the ground electrode. As a result, the corona forms over the surface of the film opposing the treater electrode to produce treated film areas on the opposing film surface.

Portions of the film overlying the recessed regions are not in contact with the ground electrode. As a result, the corona does not form over the outer surface of the film (it tends to form behind instead) and untreated areas of the first surface are produced.

In this manner, the method treats selected areas of the opposing surface of the plastic film while leaving other areas untreated. This achieves differential adhesion without the need to apply a masking or priming layer, and markedly simplifies manufacture.

Moreover, when the present films are coated with ink (contrast agent), it is not possible to see the difference between treated (adhered) areas and untreated (non-adhered or weakly adhered) areas. This is an improvement over known products with masking layers, where the pattern shapes formed by the clear pattern mask can sometimes be discerned.

Preferably the electrode recessed regions have a depth of at least 0.1mm with respect to the support regions. In other words, the recess of the recessed section is at least 0.1mm in depth. When the recessed section has a depth of less than 0.1mm, pattern resolution between treated and untreated areas may reduce. Usually it is at least 0.2 or at least 0.4mm.

The maximum depth of the recessed section is not particularly limited. However, we have found no particular improvement in resolution between treated and untreated areas of the film by increasing the depth.

Preferably the depth of the recessed section is between 0.1 and 5mm. More usually the depth of the recessed section is between 0.1 or 0.2 and 2mm.

The support region may form at least or more than 50% by surface area of the treatment surface. In this configuration, the recessed regions will typically be in the shape of discrete pattern elements e.g. word(s) and/or symbol(s), which will form on the security film.

Alternatively, the recessed section may form at least or more than 50% by surface area of the treatment surface. In this configuration, the support regions will typically be in the shape of discrete pattern elements e.g. word(s) and/or symbol(s), which will form on the security film.

It should be understood that the word "regions" includes a single continuous region of one type, with multiple regions of the other type distributed over it.

The substrate film is usually made from polymer selected from polyethylenes, polypropylenes, polyolefins, polyesters, acrylic polymers and vinyl polymers, in line with conventional knowledge. It should be transparent, and may be colourless.

The contrast agent allows a contrast between the treated areas and the untreated areas of the security film. The contrast agent adheres more to the treated areas of the film than the untreated areas. In the tamper-evident tape, the contrast agent remains on the treated areas of the security film but not on the untreated areas when the adhered tape is pulled away, producing a patterned contrast.

The contrast agent may be selected using conventional knowledge. The colour is preferably dark. Preferably the contrast agent is of the type known as ink, e.g. polyamide ink. It may be a solvent-based material, or in suspension or in dry solid form when applied. Any known cure systems, e.g. UV cure or EB cure ink or varnish may be used.

The contrast agent may be deposited onto the plastic film by known methods, such as painting, printing e.g. flexographic printing, gravure or offset, application with a roller or by spraying onto the film. Preferably it is applied with a roller.

Preferably the ground electrode is a roller. A roller ground electrode enables the apparatus of the present invention to be used in high throughput processing of continuous lengths of film.

In a preferred embodiment, the roller treatment surface, or at least support regions thereof, is made of a conductive polymer. Conductive polymers are generally inexpensive to manufacture and process and may be easily cut, moulded, etched or engraved to produce a treatment surface having support sections and recessed sections in the desired pattern.

It is particularly preferred to have a supporting section made of a conductive rubber material, e.g. rubber including conductive filler such as carbon black.

Alternative conductive polymers for use in the supporting section are conductive vinyl polymers.

The treatment surface may be integral with a body of the ground electrode. However, it is preferred that the ground electrode has a supporting layer attached to the exterior of a ground electrode body, e.g. a metal body, wherein the supporting layer includes the supporting regions.

The supporting layer may provide both recessed and support sections of the treatment surface. When the ground electrode is a roller, it is preferred that the supporting layer forms a sleeve around the body of the ground electrode.

Alternatively, the body of the ground electrode may form at least part of the recessed section. In this configuration, it is preferred that the supporting layer is formed of protrusions attached to a ground electrode body. Preferably the protrusions are in the shape of letters, words, symbols or other indicia.

When the ground electrode has a supporting layer attached to the ground electrode body, the pattern of support and recessed sections may be altered simply by exchanging one layer for another with a different pattern. In this way, the apparatus of the present invention may easily produce plastic films with a range of different patterns. A damaged layer may be replaced without the need to replace the entire ground electrode.

The security film produced from the method of the present invention may be processed into tamper-evident tape to be applied to a security container. A security container may be any container to which tamper-evident tape would be applied to secure or seal the container. Such security containers include casings, boxes and security bags, such as evidence bags or money bags.

Alternatively, the security film produced from treatment by the method of the present invention is integral with or forms part of the security container. The plastic film thus may form part of the security container and be treated by the method of the present invention to produce the security film as part of the security container. The security film may then be processed further to add a contrast agent, adhesive and release layer. In this way, the security container has integrated tamper-evident film. Or, film may be prepared in the form of labels.

Preferably the security film forms part of a plastic security bag. The method of the present invention is easily integrated into the processing of plastic security bags. In this way, the method of the present invention is applied to one of the plastic film layers of the plastic film security bag to provide an integrated security film.

The security container having the plastic film may be treated in a number of ways prior to treatment by the present invention. For example, the security container may be printed with text or shaped into a bag.

Alternatively or in addition, the security container having the security film may be further processed in a number of ways after treatment using the method of the present invention.

In another aspect, the present invention provides a security film or security film laminate produced by the above method.

In another aspect, the present invention provides a security film laminate, the laminate having a plastic film with a first surface, the first surface being patterned with a treated area and an untreated area, wherein the surface energy of the treated area is higher than the surface energy of the untreated area, the laminate further having a layer of contrast agent in contact with the treated and untreated areas of the first surface.

Preferably the laminate further includes an adhesive layer in contact with the contrast agent layer. The adhesive layer allows the laminate to be adhered to a substrate, such as a money bag. The adhesive may be a conventional pressure-sensitive adhesive, e.g. an acrylic adhesive.

Preferably the laminate further includes a release layer (also known as a release liner) on the adhesive layer. The release layer protects the adhesive layer until it is required, when it is removed. The release layer may be a siliconised protective film.

In a further aspect, the present invention provides a corona discharge treatment apparatus for treating plastic film, the apparatus having:
a treater electrode for generating a corona, the treater electrode being positioned opposite a ground electrode, the ground electrode having a treatment surface for receiving the film, wherein the treatment surface has a support section for supporting the film and a recessed section for providing a gap between the film and the ground electrode when in use.

Any one of the aspects of the present invention may be combined with any one or more of the other aspects.

Furthermore, any of the optional or preferred features of any one of the aspects may apply to any of the other aspects.

In particular, optional features associated with a method or use may apply to a product, and vice versa.

### BRIEF DESCRIPTION OF THE DRAWINGS

The present invention will be described with reference to the following drawings of embodiments in which:
Figure 1 shows a perspective view of a corona discharge treater;
Figure 1a shows a magnified surface of the corona discharge apparatus of Fig. 1;
Figure 1b shows an alternative surface configuration of the magnified surface of Fig. 1a;
Figure 2 shows a plan view of a section of security film, and
Figure 3 shows schematic cross sections of three security laminates.

### DETAILED DESCRIPTION OF EMBODIMENTS

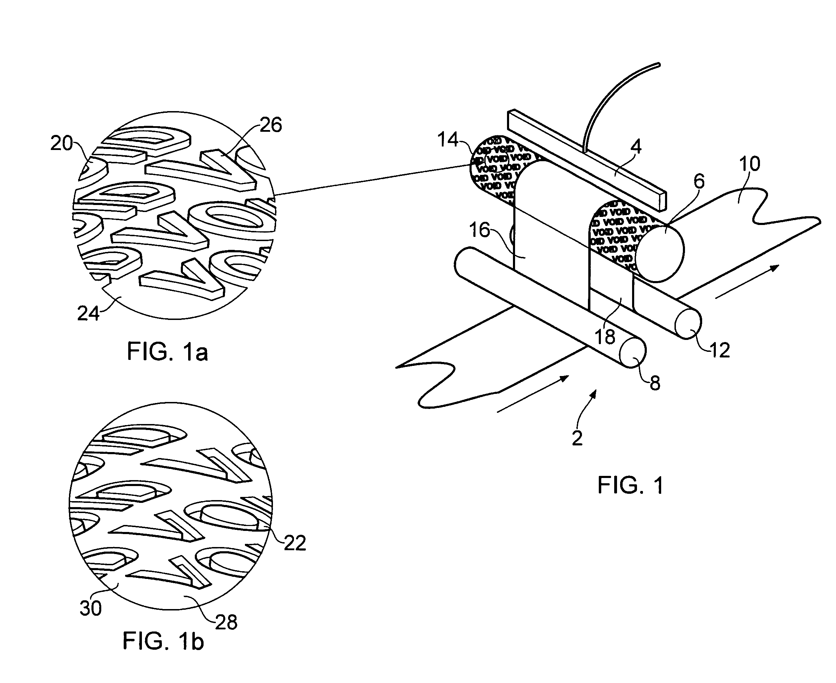

Figure 1 shows a corona discharge apparatus 2 used in the present invention. The apparatus 2 has a discharge electrode 4 facing a roller electrode 6. The roller electrode 6 acts as a ground electrode for the corona discharge apparatus 2.

The apparatus 2 also has an input roller 8 for feeding a plastic film 10 onto the roller electrode 6 and an output roller 12 for guiding the plastic film 10 off the roller electrode 6.

The discharge electrode 4 is directed towards an external surface 14 of the roller electrode 6, so that in use, a first side 16 of the plastic film 10 is treated by the discharge electrode 4 and a second side 18 of the plastic film is supported by part of the external surface 14.

The discharge electrode 4 extends along one side of the roller electrode 6. In this embodiment, the discharge electrode 4 extends along most of the length of the roller electrode 6. The particular sizes of the discharge electrode 4 and roller electrode 6 may be selected depending on the plastic film 10 size and requirements.

The external surface 14 of the roller electrode 6 is conductive and patterned with the word "VOID". Of course, the pattern on the external surface 14 of the roller electrode 6 may be formed from any other letters, words and/or symbols.

The pattern of the words may be created by protrusions 20 in the shape of letters protruding from a surface of the roller electrode 6 (as seen in Fig. 1a) or created by recesses 22 in a surface of the roller electrode 6 (as seen in Fig. 1b).

Figure 1a shows a first embodiment of the roller electrode 6. The roller electrode has an aluminium roller base 24. The roller base could be made from other any other conductive material.

The ground electrode of the present invention may be non-cylindrical, e.g. flat. However, for the processing of a continuous sheet of plastic film 10, a cylindrical roller is preferred.

Vinyl polymer letters 26 are adhered to an external surface of the aluminium roller base 24. The letters 26 forms the protrusions 20 from the surface of the roller base. The vinyl letters 26 are roughly 0.5mm in height with respect to the roller base 24. The height of the letters shouldn't be particularly limited so long as the letters 26 are at least 0.1mm in height with respect to the aluminium base 24. The letters 26 can be any size and shape

In use, the protruding letters 26 support the plastic film 10 and the areas of the plastic film 10 that are adjacent to and supported by the letters 26 are treated by the corona discharge electrode 4.

For the areas of the plastic film 10 that rest over recessed aluminium roller base 24, an air gap is created between the film 10 and the roller base 24 (roughly equivalent to the height of the letters 26). As a result, coronas form in the air gap between the film 10 and the roller base 24 rather than on the first side of the plastic film 10. In this manner, areas of the first side of the plastic film 10 are not treated.

As a result, a plastic film is produced that has a first side 16 with treated areas in the pattern of the word "VOID". The treated areas (in the shape of the letters) are surrounded by untreated areas.

Figure 1b shows a second embodiment of the roller electrode. The roller electrode 6 has an aluminium roller base 24 covered with a high-carbon content conductive rubber sleeve 28.

The sleeve 28 is engraved with recesses 22 that form the letters 26 of the word "VOID". The recesses 22 can be formed by any method, such as engraving, etching or chiselling. However, engraving, and in particular laser engraving, is preferred.

The recesses 22 are around 1.5mm deep. The depth of the recesses 22 can be varied so long as the recesses 22 are at least 0.1mm deep.

The recesses 22 do not penetrate the complete thickness of the conductive rubber sleeve 28 so that the external cylindrical surface of the roller base 24 is covered. However, the recesses 22 could extend completely through the rubber sleeve 28 to expose parts of the external cylindrical surface of the roller base 24.

The area on the external cylindrical surface around the recesses 22 forms a raised conductive surface 30.

In use, the plastic film 10 is supported by the raised conductive surface 30 surrounding the recesses 22. When the film 10 is treated with the corona discharge electrode 4, the first side of the film 10 is treated in these supported areas.

Where the plastic film 10 lies over the recesses 22, an air gap between the film 10 and the roller electrode 6 is formed within the recesses 22. When the film 10 is treated with the corona discharge roller, corona form within the recesses rather than on the first side 16 of the film 10 and as a result, the first side 16 of the film 10 is not treated.

In this manner, the first side 16 of the plastic film 10 is patterned. The untreated areas of the film 10 are in the shape of the words "VOID" and the area surrounding the words are treated.

The plastic film 10 used is usually high density polyethylene (HDPE), low density polyethylene (LDPE), a blend of HDPE and LDPE or a polyester. However other plastic materials may be used for the film 10, such as polypropylene, polyvinyl acetate, vinyl polymers, any density of polyethylene or blends thereof.

In operation, a HDPE security film 10 is fed into the apparatus 2 via the input roller 8. The film 10 may have been subjected to any number of pre-treatments, but there is no need to apply a masking agent to the film 10.

The HDPE security film 10 is fed onto the roller electrode 6 and comes into contact with the conductive surface 14. The roller electrode 6 carries the HDPE security film 10 under the discharge electrode 4, which is charged to a standard voltage potential of corona discharge equipment for treatment of HDPE plastic films.

The treated security film 32 is guided off the roller electrode 6 by an output roller 12. The resulting film 32 has a first side 16 with corona discharge-treated areas 34 and corona discharge untreated areas 36.

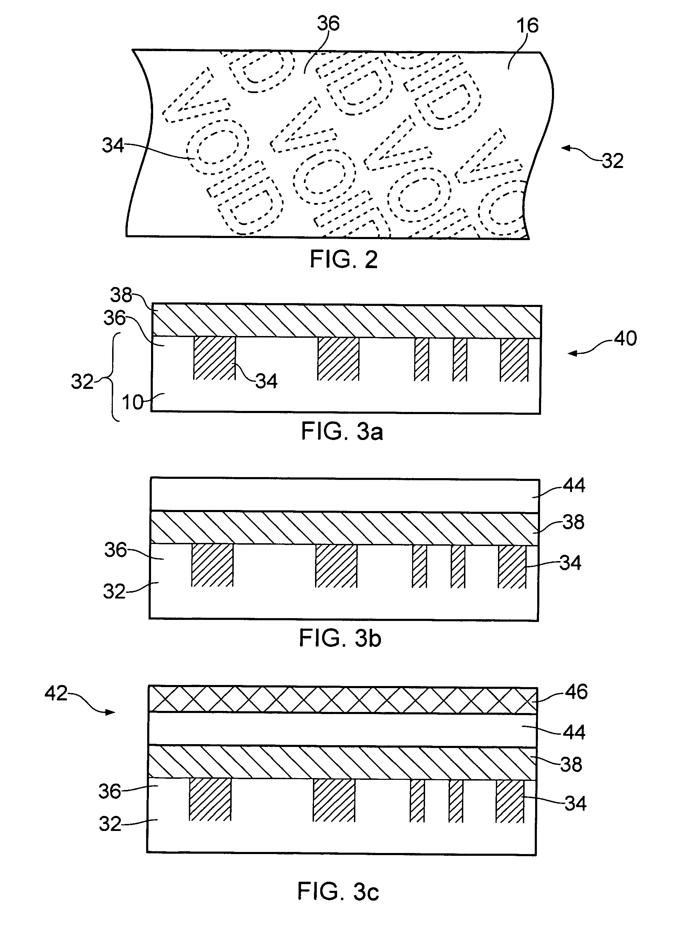

Figure 2 shows a schematic diagram of the resulting security film 32. The security film 32 is patterned on the first side 16 with the word "VOID", although this pattern is not visible with the naked eye.

In this embodiment, the security film 32 is produced using the grounded roller electrode 6 of Fig. 1a so that the areas in the shape of the letters of VOID are the treated areas 34. The areas surrounding the letters form untreated areas 36.

It will be clear that if the alternative roller electrode 6 of Fig. 1b is used, the resulting security film 32 would be similar to the security film 32 of Fig. 2 but the areas in the shape of the letters would form untreated areas and the areas surrounding the letters would form treated areas.

The resulting security film 32 is then processed to add an ink 38 to the first side 16 of the security film 32. In this embodiment, a polyamide-based ink 38 is painted with a roller onto the first side 16 of the security film 32 to form a security tape laminate 40. Other inks may be applied and other methods of applying the ink to the first side 16 of the security film 32 may be used.

Figure 3a shows a cross-section of such a security tape laminate 40. The first side of the plastic film 10 has been treated to produce a security film 32 with treated 34 and untreated 36 areas. A layer of polyamide ink 38 is printed onto this first side 16 of the security film 32.

Once the ink 38 has been applied to the security film 32, the appearance of the ink 38 is uniform across the ink surfaces of the security laminate 40. In other words, it is difficult or impossible to distinguish by eye between the treated 34 and untreated 36 areas of the first side 16 of the security film 32.

The resulting roll of treated and inked HDPE security film laminate 40 may be supplied to customers as a roll of laminate 40 to be processed later into tamper evident tape 42. Alternatively, the laminate 40 may be processed further in the same production line to make the tamper evident tape 42.

Processing security film 32 into tamper evident tape 42 is known. Typically, the roll of laminate 40 is cut into strips and an adhesive layer 44 applied to the ink 38 layer. Fig 3b shows a cross-section of the security laminate of Fig 3a with an adhesive layer 44 applied to the ink layer.

The adhesive layer 44 must then be protected by, for example, a protective film 46 or applied to a substrate 48, such as a tamper-evident bag before the adhesive 44 becomes ineffective. Fig 3c shows a cross-section of the security laminate of Fig 3b with a protective layer 46 applied to the adhesive layer 44 to form tamper-evident tape 42.

Commonly, the security tape laminate 40 is partially adhered to a substrate 48, such as a bag, and partially protected with a protective film 46. In this way, the tamper-evident tape 42 forms part of the bag and may be used to seal the bag at a time selected by the user.

## Claims

1. A security film laminate, comprising
a polymeric substrate film (10), said substrate film having a first surface and a second surface, and
a layer of coloured contrast agent (38) adhered to the first surface of the substrate film (10), the substrate film and layer of coloured contrast agent having a mutual contact interface;
**characterised in that**
the contact interface has a pattern of adhered regions and intervening regions, the adhesion between the contrast agent layer and the substrate film being stronger at the adhered regions than at the intervening regions of contact, said difference of adhesion being obtainable as a result of the first surface of the substrate film having been selectively plasma-treated in accordance with said pattern, at regions corresponding to the adhered regions, to increase the surface energy at those regions before application of said coloured contrast agent layer (38) thereto.

2. A security film laminate as claimed in claim 1 in which said pattern is a repeating array of indicia (26).

3. A security film laminate as claimed in claim 2 in which said indicia (26) are selected from letters, words, numbers and symbols.

4. A security film laminate according to any one of claims 1 to 3 comprising an adhesive layer (44) superimposed over the contrast agent layer (38).

5. A security film laminate according to claim 4 comprising a release layer (46) superimposed in contact over the adhesive layer (44), to be peeled away for use of the film laminate.

6. A security film laminate according to any one of the preceding claims in which the substrate film is made from polymer selected from polyethylenes, polypropylenes, polyolefins, polyesters, acrylic polymers and vinyl polymers.

7. A security film laminate according to any one of claims 1 to 6 which is in the form of a tape.

8. A security film laminate according to any one of claims 1 to 6 which is comprised in a security container.

9. A security film laminate according to any one of claims 1 to 6 which is in the form of a roll.

10. A method of making a security film laminate comprising
a polymeric substrate film (10), said substrate film having a first surface and a second surface, and
a layer (38) of coloured contrast agent adhered to the first surface of the substrate film, the substrate film and layer of coloured contrast agent having a mutual contact interface, and said laminate optionally having the features of any one of claims 2 to 9;
the method comprising the steps of:
(i) placing the polymeric substrate film for treatment in a corona discharge treater having a support electrode and a treater electrode, the support electrode having a treatment surface against which said second surface of the film rests, the electrode treatment surface having support regions which contact the second surface of the film to support it and relatively recessed regions where there is a gap between the second surface of the film and the treatment surface, said support regions and relatively recessed regions defining a pattern;
(ii) producing plasma between the treater electrode and the support electrode, whereby on the first surface of the film plasma forms only above said support regions, thereby plasma treating said first surface of the film according to said pattern to increase the surface energy thereof in regions according to said pattern;
(iii) forming said contrast agent layer on the first surface of the polymeric substrate film, whereby adhesion between the contrast agent layer and the substrate film is stronger at the film regions plasma treated according to said pattern, and corresponding to said support regions of the electrode treatment surface, than at intervening regions corresponding to said relatively recessed regions of the electrode treatment surface.

11. A method of claim 10 in which said pattern defined by the support regions and relatively recessed regions is a repeating array of indicia selected from letters, words, numbers and symbols.

12. A method of claim 10 or 11 wherein the support electrode is a rotating roller around which the film is fed.

13. A method of claim 10, 11 or 12 wherein at least the treatment surface of said support electrode is made from conductive polymer.

14. A method of any one of claims 10 to 13 wherein the depth of the relatively recessed regions of the electrode treatment surface defining said pattern is between 0.1 and 2mm with respect to the support regions.

15. A method of any one of claims 10 to 14 comprising superimposing an adhesive layer (44) over the contrast agent layer, and optionally providing a peelable release layer (46) over the adhesive layer.
